Europäisches Patentamt

European Patent Office

Office européen des brevets

(11) Publication number: **0 428 317 A2**

# EUROPEAN PATENT APPLICATION

(21) Application number: 90312137.4

(22) Date of filing: 06.11.90

(51) Int. Cl.⁵: **B21H  3/02**

(30) Priority: 14.11.89 JP 295788/89

(43) Date of publication of application:
22.05.91 Bulletin  91/21

(84) Designated Contracting States:
AT BE CH DK ES FR GB IT LI NL SE

(71) Applicant: **Yugen Kaisha Shinjo Seisakusho**
1-22, Matsu 3-chome
**Nishinariku Osaka(JP)**

(72) Inventor: **Shinjo, Katsumi**
1-22, Matsu 3-chome
**Nishinariku, Osaka(JP)**

(74) Representative: **Purvis, William Michael**
**Cameron et al**
**D. Young & Co. 10 Staple Inn**
**London WC1V 7RD(GB)**

(54) Method and apparatus for manufacturing an anchor bolt.

(57) In a method of manufacturing anchor bolts to be fixed on concrete structures there is a preliminary step of heading a steel rod to form at an upper end thereof, a head (13) having a tapered surface (13a) tapering downwardly from the upper end and, decreasing in diameter subsequently a male screw (14) is formed at the other end of a rod by thread-rolling, and simultaneously a part adjacent to the head is rolled to form a reduced diameter rod-portion by gradually displacing a surface layer of the rod-portion (15) inwardly and outwardly to give rise to inner (18) and outer (17) transient swells respectively forming a stopper and a tapered portion merging into the tapered surface (13a) of the head. An expansible sleeve is loosely fitted on the reduced diamter rod-portion, with the sleeve being made by die-cutting and bending a metal plate into a cylindrical shape of an outer diameter substantially equal to outer diameter of the screw (14).

**FIG.8**

## METHOD AND APPARATUS FOR MANUFACTURING AN ANCHOR BOLT The invention relates to a method and apparatus for manufacturing anchor bolts.

Anchor bolts can be used to fix various mechanical parts and devices on concrete structures such as walls, ceilings or floors.

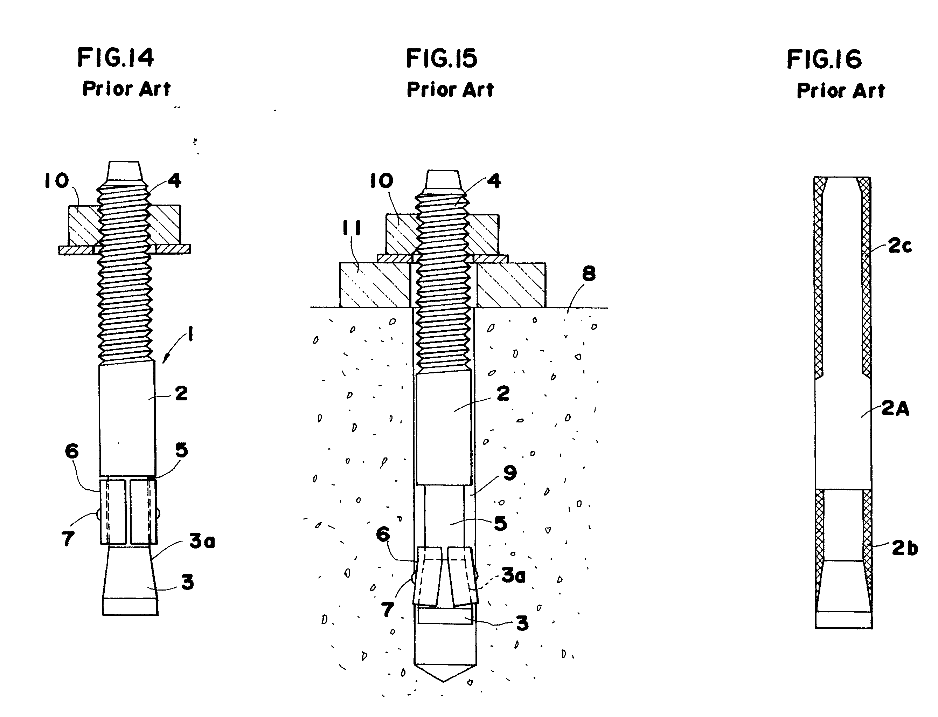

Figures 14 and 15, of the accompanying drawings show an anchor bolt of previously proposed kind comprising an anchor body member 1 formed as a rod 2 with an expansion body 3 at one of its ends and a male screw thread 4 at the other of its ends. A reduced diameter portion 5 is formed adjacent the expansion body 3, and an expansible sleeve 6 is mounted on the portion 5. The expansible sleeve 6 is ride by die-cutting a thin metal plate and rolling it into a cylindrical shape with an outer diameter almost the same as that of the male screw 4. The expansible sleeve 6 is loosely fitted on the reduced diameter portion 5 and has on its outer surface gripping protrusions 7 which prevent the sleeve from being pulled out of a bore 9 in a concrete body 8.

As shown in Figure 15, the anchor bolt is pressed into the bore 9 in the concrete body 8, with its expansion body 3 positioned deepest in the bore 9. The gripping protrusions 7 of the expansible sleeve 6 engage with an inner surface of the bore 9. Then, a nut 10 put on the male screw thread 4 is tightened to secure an object 11 which is to be mounted on the concrete body. A pulling force thereby imparted to the anchor body 1 causes a tapered surface 3a of the expansion body 3 forcibly to expand the expansible sleeve 6, whereby the anchor body is fastened to the concrete body 8.

The anchor bolt described above is simple in its structure since the diameter of the rod 2 of the anchor body 1, a maxim diameter of the expansion body 3, the outer diameters of the male screw thread 4 and of the expansible sleeve 6 are almost the same. Therefore, the bore 9 drilled in the concrete body 8 can have a minimum diameter, which provides a great advantage to the related construction works.

It is, however, to be noted that the anchor body 1 has been manufactured from a raw rod 2A of a diameter equal to the diameter of the thread of the male screw thread 4, by a cutting or machining technique removing portions 2b and 2c shown in Figure 16 to form the enlarged head 3, the reduced diameter portion 5 and the the screw thread 4. Such a manufacturing method is disadvantageous in that productivity is low, yield of good products is low and the cost of manufacture is high.

Recently, multistage cold-forging also has been applied to the manufacture of the anchor body 1 in order to improve the productivity and to lower the manufacturing cost. Manufacturing equipment for multistage cold-forging is very expensive and needs many machine tools due to the multistage system so that a significant decrease in manufacturing cost cannot be expected from this system.

According to one aspect of the invention there is provided a method of manufacturing an anchor bolt comprising the steps of:
preliminarily heading a first end of a steel rod to form a preliminary head having a tapered surface which tapers, decreasing in diameter, from the first end towards a middle portion of the steel rod;
thread rolling a second end of the steel rod to form a male screw thread on the steel rod having a core diameter substantially equal to the smallest diameter of the tapered surface;
rolling an intermediate portion of the steel rod adjacent to the preliminary head simultaneously with the thread rolling to form a reduced diameter rod-portion by gradually inwardly displacing a surface layer of the intermediate portion causing an inner transient swell in the axial direction of the steel rod to form a stopper and radially outwardly displacing the surface layer causing an outer transient swell to form a tapered portion merging into the tapered surface of the preliminary head thereby to form a frustum-shaped expansion body; and
die-cutting and bending a thin metal plate into a cylindrical shaped expansible sleeve having an outer diameter substantially equal to the outer diameter of the male screw thread.

According to another aspect of the invention there is provided apparatus for manufacturing an anchor body of an anchor bolt, the apparatus comprising:
a header means including a pair of header dies to press a first end portion of a steel rod to form a preliminary head having a tapered surface which tapers, decreasing in diameter, from a first end toward a middle portion of the steel rod; and
a pair of rolling die assemblies each including a neck-rolling die overlying and fixedly secured to a thread-rolling die with a spacer interposed therebetween, the thread-rolling die forming a male screw thread on a second end of the steel rod opposite to the first end thereof, and the neck-rolling die forming a reduced diameter rod-portion;
wherein the neck-rolling dies each include an upper slope, a lower slope, and a vertical forging surface formed with a sharp edge located foremost of the respective neck-rolling dies in the direction of movement of the rolling die assemblies, a rear width of the vertical forging surface of each of the neck-rolling dies gradually increases with widths of the upper and lower slopes gradually simultaneously decreasing, a rear portion of the upper slope gradually merges into a further slope inclined at the same angle as the tapered surface so as to form a frustum-shaped expansion body, and a rear portion of the lower slope of each of the neck-rolling dies gradually merges into a stepped recess to form a stopper at an end of the reduced diameter rod-portion.

Such a method and apparatus can employ a simple but effective means suited to mass production of the described anchor bolts at a lower cost.

Advantageously the method includes forming a plurality of deep notches extending axially from a first end of the expansible sleeve toward a second end thereof, and a plurality of spring tongues respectively disposed between adjacent ones of the deep notches.

The method preferably includes assembling the bolt by loosely fitting the expansible sleeve on the intermediate portion with the plurality of tongues being engageable with and retained by the stopper, and the first end of the expansible sleeve co-operating with the expansion body.

Preferably the plurality of spring tongues are formed by partially slitting the other end and by bending parts disposed between the adjacent slits outwardly in a radial direction.

The header and the pair of rolling die assemblies combined therewith are thus suited for the mass production of the anchor body. The expansible sleeve also can be mass-produced by die-cutting and bending the thin metal plate.

It will now be apparent that the method of the invention is composed of two steps, which are the step of preliminarily heading the steel rod of a diameter substantially equal to that of the core diameter of the rolled male screw thread, by an ordinary header, and the step of subsequently rolling the rod by a pair of rolling die assemblies. Thus, it has become possible to manufacture the anchor body on a scale of mass production and thus at a low price. The method remarkably reduces the loss of raw material in the steps, thereby sharply reducing manufacture cost.

The apparatus of the invention can be of a simpler structure which can be built inexpensively and which nevertheless makes it easier to carry out the method in the invention.

Further, as described above, the expansible sleeve which is to be combined with the anchor body can be made by die-cutting and bending the thin metal plate to comprise the spring tongues which are formed by partially slitting one end portion and by subsequently bending the parts between the adjacent slits outwardly and radially. Such a structure of the expansible sleeve is advantageous not only in that it can be manufactured simply and low in cost, but also in that it can be inserted smoothly into a bore formed in a concrete structure and be expanded easily therein whereby construction works are rendered easier.

The invention is diagrammatically illustrated by way of example in the accompanying drawings, in which:

Figure 1 is a vertical cross-section of a header which is utilised to form a preliminary head of an anchor body in a method according to the invention;

Figure 2 is a vertical cross-section of the header so formed;

Figure 3 is a perspective view of a rolling die assembly used to form the anchor body by a rolling technique in a method according to the invention;

Figure 4 is a front elevation of the rolling die assembly of Figure 3;

Figure 5 is a side elevation of the rollingodie assembly of Figures 3 and 4;

Figure 6 is a partial cross-sectional view of a stage in a rolling technique of a method according to the invention taken on line 6-6 in Figure 4;

Figure 7 is a partial cross-sectional view of another stage in the rolling technique taken on line 7-7 in Figure 4;

Figure 8 is a partial cross-sectional view of a further stage in the rolling technique taken on line 8-8 in Figure 4;

Figure 9 is a partial cross-sectional view of a still further stage in the rolling technique taken on line 9-9 in Figure 4;

Figure 10 is a front elevation of an anchor body which has been completely formed by the method of the invention;

Figure 11 is a front elevation of a complete anchor bolt including the anchor body of Figure 10;

Figure 12 is a perspective view of an expansible sleeve of an anchor bolt formed by the method of the invention;

Figure 13 is a development of the expansible sleeve of Figure 12;

Figure 14 is a front elevation of an anchor bolt of previously proposed kind;

Figure 15 shows the anchor bolt of Figure 14 in use, and partially in cross-section; and

Figure 16 illustrates a manufacturing disadvantage of the anchor body of the anchor bolt of Figure 14.

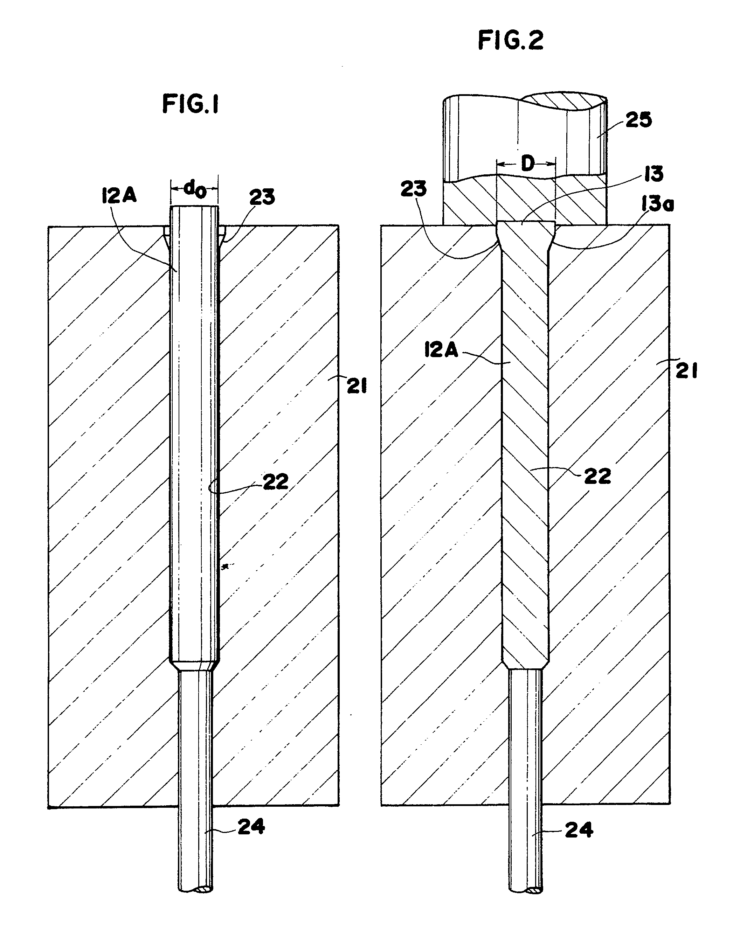

Figures 1 and 2 illustrate a header which is used to perform a first step of preliminarily heading a steel rod 12A or anchor bolt blank. A header die 21 has a bore 22 into which the steel rod 12A is inserted. A head-forming recess 23 is located at an upper end of the bore 22, and an ejection pin 24 is fitted in a bore aligned with that bottom end of the bore 22.

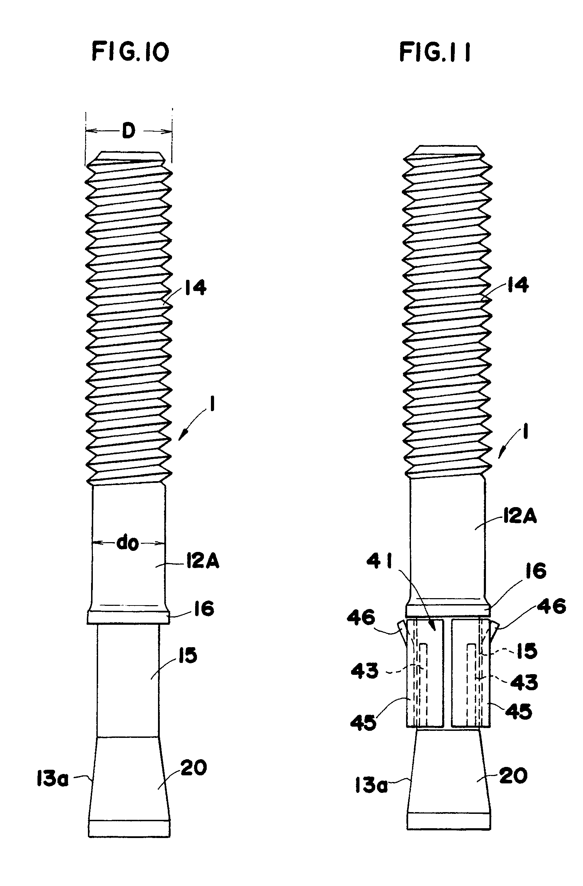

The steel rod 12A is of a diameter $d_0$ substantially equal to a core diameter of a male screw thread 14 to be formed by a rolling technique as shown in Figure 10. Figure 2 illustrates a heading punch 25 which presses one end of the steel rod 12A protruding from the bore 22 of the header die 21. A preliminary head 13 is thus formed by the head-forming recess 23, with the preliminary head having a tapered surface 13a which tapers, decreasing its diameter, from said one end towards a middle portion of the rod 12A. After this preliminary forming step, the maximum diameter of the preliminary head 13 is substantially equal to an outer diameter D of the male screw thread 14.

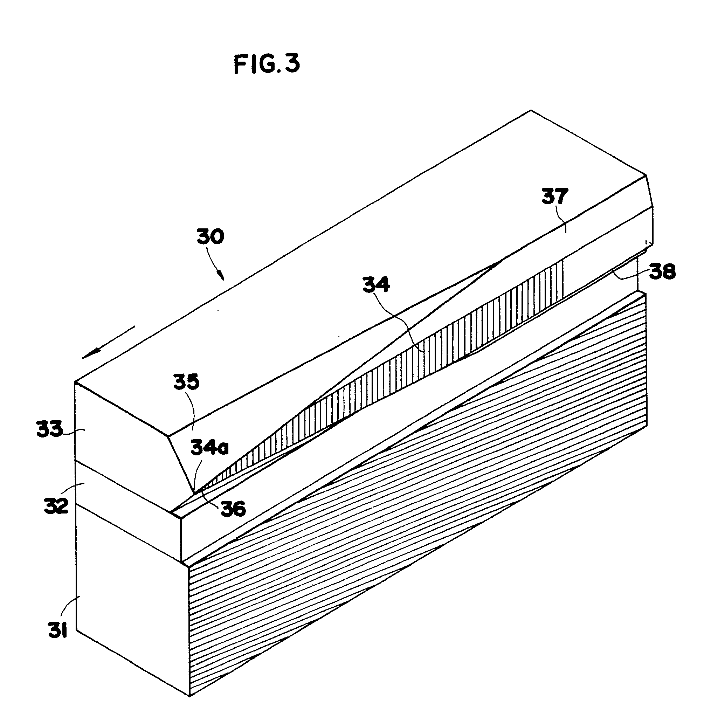

As shown in Figures 3 to 5, a rolling die assembly 30 comprises a thread-rolling die 31 to form the male screw thread 14 at the other end the steel rod 12A which has undergone the preliminary forming step, a spacer 32 overlying the thread-rolling die 31, and a neck-rolling die 33 overlying the spacer 32 so as to be fixedly secured to the thread-rolling die 31. The neck-rolling die 33 is of a shape such that a rod-portion 15 of reduced diameter is formed as illustrated in Figure 10. The neck-rolling die 33 has an upper slope 35 and a lower slope 36 which constitute one of vertical forging surfaces 34 which are opposed in a pair of the rolling die assemblies 30. Each vertical forging surface 34 is formed as a sharp ridge located foremost in a direction denoted by an arrow in Figure 3, in which direction the assembly moves. A rear width of the forging surfaces 34 gradually increases, with widths of the upper slope 35 and the lower slope 36 gradually decreasing at the same time. A rear portion of the upper slope 35 gradually merges into a further slope 37 which is inclined at the same angle as the tapered surface 13a of the preliminary head 13, while a rear portion of the lower slope 36 gradually merges into a stepped recess 38 which is to form a stopper 16 at an end of the rod-portion 15 of reduced diameter.

The manner in which the thread-rolling dies 31 and 31 form the male screw thread 14 at the other end of the steel rod 12A is a common practice in the conventional thread-rolling process. However, a sharp ridge 34a on the neck-rolling dies 33 grip a steel rod portion near the preliminary head 13, just before the thread-rolling commences in the method, whereby an annular groove 15a is formed at first at the steel rod portion.

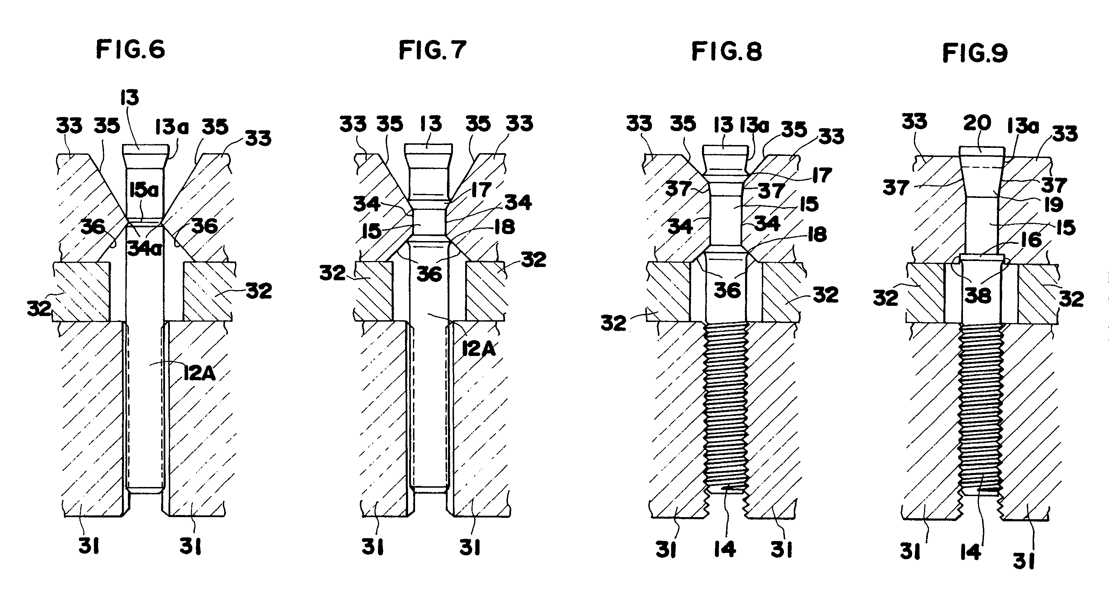

As the rear width of each of the forging surfaces 34 opposed to each other increases gradually, the width of the annular groove also gradually increases in an axial direction of the rod. Thus, the reduced diameter rod-portion 15 is gradually formed as is shown in Figure 7. This rolling of the steel rod portion gives rise to an outer transient swell 17 on the surface thereof as well as an inner transient swell 18, which starts to move in opposite axial directions of the steel rod. The further slope 37 subsequently assists the outer swell 17 to move outwardly, as is shown in Figure 8.

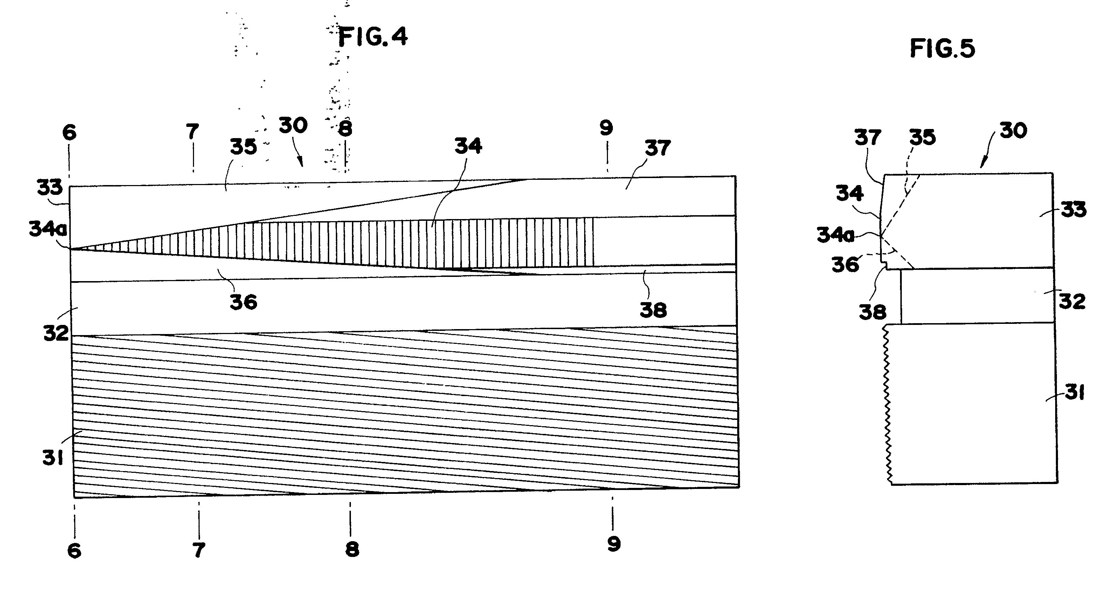

Thereafter, a rear (right-hand in Figure 4) region of the neck-rolling dies 33 forces the inner transient swell 18 into the stepped recess 38. As a result, the stopper 16 is produced to have a flange-like shape with a diameter substantially equal to the outer diameter of the male screw thread 14, as shown in Figure 9. On the other hand at the same time, the further slope 37 in the rear or right-hand region forcibly deforms the outer transient swell 17 into a tapered portion 19 which merges into and adjoins the tapered surface 13a of the preliminary head 13, so as to form an integral tapered region. The tapered surface 13a is thus elongated to the end of the reduced diameter rod-portion 15 and has a desirable length, whereby an expansion body 20 of a pre-determined frustum shape is provided for an anchor body 1 as illustrated in Figure 10.

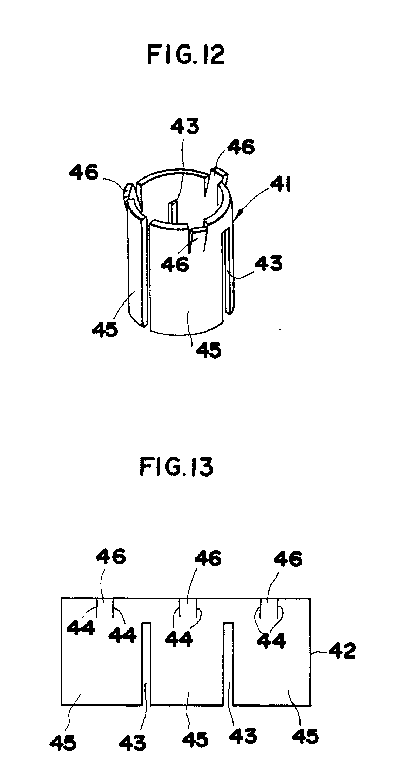

Finally, an expansible sleeve 41 shown in Figure 11 is fitted loosely on the reduced diameter rod-portion 15 of the anchor body 1.

The expansible sleeve 41 is made of a thin rectangular metal plate 42, as illustrated in Figure 13. Deep notches 43 are formed to extend from one edge towards an opposite edge. Pair of slits 44 spaced apart an adequate distance are also formed at said opposite edge. Then, the metal plate 42 is rolled into a cylindrical shape with an outer diameter substantially equal to that of the male screw thread 14, as shown in Figure 12. Expansible tongues 45 are formed between two adjacent ones of the deep notches 43 or between one such notch and a side edge of the metal plate 42. The parts of the metal plate 42 which are disposed between the paired adjacent slits 44 are bent outwardly in a radial direction so as to form spring tongues 46. Said opposite edge, at which the spring tongues 46 are located, engages with and is retained by the stopper 16 when the expansible sleeve 41 is loosely fitted on the reduced diameter rod-portion 15.

The expansible sleeve 41 is not rigid but rather has spring-characteristics. Consequently, it does not exert any strong resistance when inserted in a bore of a concrete structure so that the pushing of the sleeve by any tool or part thereof such as a, grip of a hammer will be enough to set the expansible sleeve 41 in position within the bore. Further, such an expansible sleeve 41 is ready to expand in the bore 9 and is so securely fixed therein that it cannot be withdrawn therefrom.


**Claims**

1. A method of manufacturing an anchor bolt comprising the steps of:

preliminarily heading a first end of a steel rod (12A) to form a preliminary head (13) having a tapered surface (13a) which tapers, decreasing in diameter, from the first end towards a middle portion of the steel rod (12A);

thread rolling a second end of the steel rod (12A) to form a male screw thread on the steel rod (12A) having a core diameter substantially equal to the smallest diameter of the tapered surface (13a);

rolling an intermediate portion of the steel rod (12a) adjacent to the preliminary head (13) simultaneously with the thread rolling to form a reduced diameter rod-portion by gradually inwardly displacing a surface layer of the intermediate portion causing an inner transient swell (18) in the axial direction of the steel rod to form a stopper (16) and radially outwardly displacing the surface layer causing an outer transient swell (17) to form a tapered portion (19) merging into the tapered surface (13A) of the preliminary head (13A) thereby to form a frustum-shaped expansion body (20); and

die-cutting and bending a thin metal plate (42) into a cylindrical shaped expansible sleeve (41) having an outer diameter substantially equal to the outer diameter (D) of the male screw thread.

2. A method according to claim 1, including forming a plurality of deep notches (43) extending axially from a first end of the expansible sleeve (41) toward a second end thereof, and a plurality of spring tongues (45) respectively disposed between adjacent ones of the deep notches.

3. A method according to claim 2, including assembling the bolt by loosely fitting the expansible sleeve on the intermediate portion with the plurality of tongues (46) being engageable with and retained by the stopper (16), and the first end of the expansible sleeve (41) co-operating with the expansion body (20).

4. A method according to claim 2 or claim 3, wherein the plurality of spring tongues (46) are formed by partially slitting said second end of the expansible sleeve (41) and bending portions of the metal plate (42) disposed between the adjacent slits (44) outwardly in a radial direction.

5. Apparatus for manufacturing an anchor body (1) of an anchor bolt, the apparatus comprising:

a header means including a pair of header dies (21) to press a first end portion of a steel rod (12A) to form a preliminary head (13) having a tapered surface (13a) which tapers, decreasing in diameter, from a first end toward a middle portion of the steel rod (12A); and

a pair of rolling die assemblies (30) each including a neck-rolling die (33) overlying and fixedly secured to a thread-rolling die (31) with a spacer (32) interposed therebetween, the thread-rolling die (31) forming a male screw thread on a second end of the steel rod (12A) opposite to the first end thereof, and the neck-rolling die (33) forming a reduced diameter rod-portion (15);

wherein the neck-rolling dies (33) each include an upper slope (35), a lower slope (36), and a vertical forging surface (34) formed with a sharp edge (34a) located foremost of the respective neck-rolling dies in the direction of movement of the rolling assemblies (30), a rear width of the vertical forging surface (34) of each of the neck-rolling dies (33) gradually increases with widths of the upper (35) and lower (36) slopes gradually simultaneously decreasing, a rear portion of the upper slope gradually merges into a further slope (37) inclined at the same angle as the tapered surface (13a) so as to form a frustum-shaped expansion body (20), and a rear portion of the lower slope (36) of each of the neck-rolling dies gradually merges into a stepped recess (38) to form a stopper (16) at an end of the reduced diameter rod-portion (15).

FIG.1

FIG.2

# FIG.3

FIG.5

FIG.4

FIG.6    FIG.7    FIG.8    FIG.9

EP 0 428 317 A2

FIG.10

FIG.11

## FIG.12

## FIG.13

# FIG.14
## Prior Art

# FIG.15
## Prior Art

# FIG.16
## Prior Art

EP 0 428 317 A2